# EUROPEAN PATENT SPECIFICATION

(11) **EP 2 186 774 B1**
(45) Date of publication and mention of the grant of the patent: **21.03.2012**
(21) Application number: 09173249.5
(22) Date of filing: 16.10.2009
(51) Int. Cl.: C01B 25/22, C01B 25/222, C01B 25/223, C01B 25/234, C01B 25/237, C01F 11/46, C01D 3/04

(54) **Process for the production of high purity phosphoric acid**
Verfahren zur Herstellung von hochreiner Phosphorsäure
Procédé de production d'acide phosphorique de haute pureté

(30) Priority: 16.10.2008 BE 200800572; 16.10.2008 WO PCT/EP2008/063969
(43) Date of publication of application: 19.05.2010
(73) Proprietor: Ecophos S.A., 1348 Louvain-la-Neuve (BE)
(72) Inventor: Takhim, Mohamed, 1325 Corroy-le-Grand (BE)
(74) Representative: Pecher, Nicolas

(56) References cited:
- WO-A-2004/002888
- WO-A-2005/066070
- FR-A- 2 103 042
- FR-A- 2 273 760

## Description

### Technical field

The invention relates to a process for the production of phosphoric acid (PA) which may be recovered at very high purity such as electronic grade quality, food grade quality or pharmaceutical grade quality. This process produces co-products such as pure gypsum and high purity chloride salts.

### Description of the state of the art

The semiconductor industry has to avoid all kinds of influences on the behaviour of e.g. silicon substrates by the use of etching liquids. Therefore very pure chemicals, including phosphoric acid must be used in all steps of memory or processor production. Metal ions will have influence on the behaviour of a silicon substrate, because the conductivity is influenced. For instance, antimony (Sb) is used as a dopant in the production of semi-conductors and enhances the ability of a semiconductor to conduct electricity by providing selective negatively charged areas within the substrate. Antimony and its ions are known to be most difficult to remove from elemental phosphorus. (see US 5,989,509). This problem also exists for high value phosphoric acid products such as semiconductor grade or electronic grade' phosphoric acid. It is further desirable to remove metal ions from phosphoric acid, in such a way that so-called 'electronic grade' phosphoric acid, is obtained. 'Electronic grade phosphoric acid' means high purity phosphoric acid having sufficient purity to be used in electronic devices manufacturing including but not limited to semi-conductors, printed circuits boards, flat screens, photovoltaic cells, and related products. For instance, the norm Semi International standards SEMI C36-0301 gives specifications for phosphoric acid grades 1, 2 and 3 which are suitable for working in the semiconductor field.

Methods for producing phosphoric acid have been known for a long time. Two types of methods are known, viz. dry methods and the wet methods. Electronic grade phosphoric acid is generally produced by dry methods based on the thermal reduction process of phosphate rock at very high temperature, which has the disadvantage to be extremely costly in energy. Some well-known wet methods involve attack of phosphate rock with acids, principally sulphuric acid, but also nitric, perchloric or hydrochloric acids. A hydrochloric attack of the phosphate rock is known for example from US 3,304,157 and GB-1051521.These methods have the drawback that they generally use, for the attack, a concentrated solution of HCl which may be 20% or even 30% by weight. The rock to be used has to be of good quality, that is to say, amongst others, that it must have a high P₂O₅ content, and fine grinding of the rock is usually required, which increases the costs.

Also known is a hydrochloric etching method in which the rock is subjected to a first limited attack with diluted hydrochloric acid, a second attack with diluted hydrochloric acid and then liquid-liquid extraction to remove calcium chloride (US- 3, 988, 420).

It has also been known to apply a different method of producing phosphoric acid, as described in US 2005/0238558 and in US 7,361,323, which comprises a neutralization step.

However, none of these wet processes produces electronic grade quality phosphoric acid. In view of the disadvantages of the dry methods such as for instance the high temperature, there is need for such a wet process to make high purity phosphoric acid.

We have now found that is possible to obtain, by a wet process, such an electronic grade quality phosphoric acid. In particular, we have found that it is possible to obtain very good results as far as the content in antimony is concerned.

Within the frame of this specification, phosphate values, except where otherwise indicated, will be expressed on a weight % basis and as phosphoric acid anhydride (P₂O₅).

### Summary of the invention

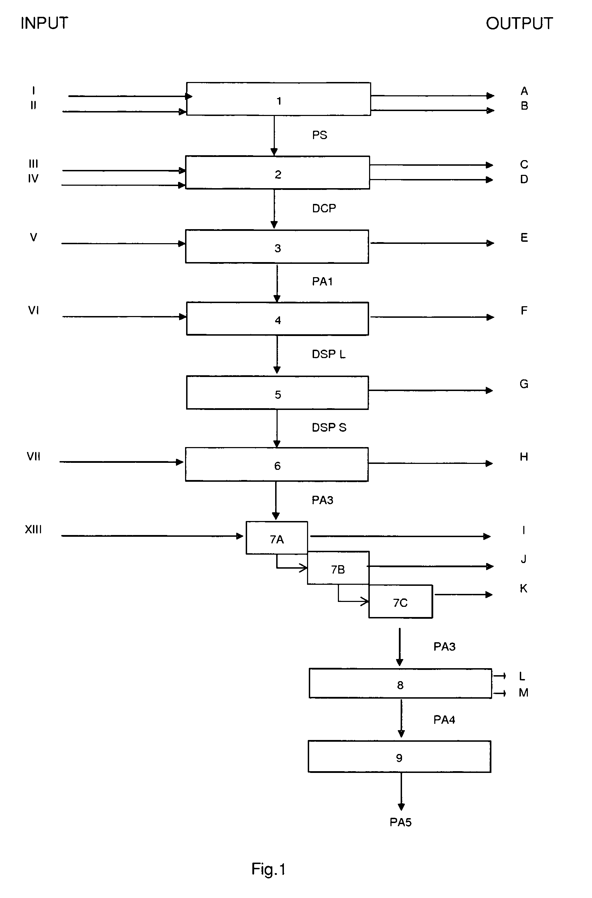

The invention relates to a process for the production of high purity phosphoric acid which comprises the following successive steps:
- (a) performing an attack of a first phosphate salt with a first strong acid to form a slurry of first phosphoric acid, in solution, and a first solid phase (first part of step 3, see Fig.1);
- (b) separating the first phosphoric acid from the first solid phase (second part of step 3, see Fig. 1);
- (c) adding of a basic compound to the first phosphoric acid to form a new slurry of a second phosphate salt, in solution, and a second solid phase containing impurities (first part of step 4, see Fig.1);
- (d) separating the second phosphate salt from the second solid phase (second part of step 4, see Fig. 1);
- (e) performing a second attack of the second phosphate salt with a second, concentrated, strong acid to form a second phosphoric acid and a salt (first part of step 6, see Fig.1);
- (f) separating the second liquid phosphoric acid from the salt (second part of step 6, see Fig. 1);
- (g) extracting the second phosphoric acid with an organic solvent to form an organic extraction phase containing phosphoric acid and an aqueous extraction phase containing impurities (step 7A -see Fig.1)
- (h) re-extracting said organic extraction phase by an aqueous re-extraction agent to form an aqueous re-extraction phase and a phosphoric acid-lean organic phase (step 7B - see Fig.1);
- (i) separating the aqueous re-extraction phase which is a third phosphoric acid and the organic phase (step 7C - see Fig.1); and
- (j) applying ion-exchange to the third phosphoric acid to produce a high purity phosphoric acid (step 9 - see Fig.1).

The first phosphate salt may be obtained according to different process and may be bought on the market. However, in a preferred way, the process of the invention comprises, before the step (a) performing an attack of the first phosphate salt with the first strong acid, the following steps:
- performing an attack of phosphate rock with a solution of hydrochloric acid to form a slurry consisting of an aqueous phase, containing, in solution, phosphate ions, chloride ions and calcium ions and an insoluble solid phase containing impurities (first part of step 1 - see Fig.1);
- separating the aqueous phase, comprising, in solution, phosphate ions, chloride ions and calcium ions, and the insoluble solid phase (second part of step 1 - see Fig.1);
- performing a neutralisation of the aqueous phase by addition of a calcium compound to form calcium phosphate from the phosphate ions, said calcium phosphate being insoluble in water (first part of step 2 - see Fig.1);
- a separating the calcium phosphate, which may be used in the process as the first phosphate salt, and the aqueous phase containing, in solution, calcium ions and chloride ions. (second part of step 1 - see Fig.1).
   In such a case, the concentration of hydrochloric acid is preferably comprised between 3 and 10 % w/w, the molar ratio between HCl and Ca is comprised between 0.6 and 1.3, and the pH may be lower than 1.4

The process may further comprise performing a preliminary neutralization (not represented in Fig.1) of the said slurry to a pH lower than the pH at which a significant part of calcium phosphate precipitates. This pH is adjusted by said preliminary neutralization between 0.8 and 4, preferably, between 1.3 and 1.4. The neutralization and preliminary neutralization may be carried out with a strong base chosen in the group consisting of calcium hydroxide, calcium carbonate and mixtures thereof.

Preferably, the first phosphate salt is calcium monohydrogenophosphate (DCP). The first phosphate salt may have a P₂O₅ concentration of 40 to 50 % w/w and a calcium concentration of 25 to 28 % w/w.

The step of adding a basic compound to form a second phosphate salt, is preferably performed at a temperature between 40 and 90°C.

Preferably, the first strong acid is sulphuric acid. The molar ratio between the first strong acid and the first phosphate salt is preferably comprised between 0.6 and 1.6. More preferably, this ratio is 1.

When the first strong acid is sulphuric acid and the first phosphate salt is DCP, the first solid phase is gypsum. According to the invention, it has been possible to obtain such a co-product with a very high purity, as is described in the example below.

The first phosphoric acid obtained according to the process of the invention has preferably a P₂O₅ content comprised between 20 and 40 % w/w.

The basic compound is preferably chosen in the group consisting of sodium carbonate, sodium hydroxide, potassium carbonate, potassium hydroxide, ammonia, ammonium hydroxide and mixtures of these compounds. It may be added to the first phosphoric acid to reach a pH between 6.0 and 10.0.

The second phosphate salt is preferably a sodium phosphate salt, preferably disodium phosphate (DSP). The second phosphate salt may have a P₂O₅ content comprised between 20 and 50 % w/w.

The process of the invention may further comprise
- obtaining a crystallisation of the second phosphate salt (preferably liquid disodium phosphate - DSP I) to form a solid phosphate salt (solid disodium phosphate - DSP s) and a liquid phase containing impurities (first part of step 5 - see Fig.1);
- separating the second phosphate salt, once crystallized, from the liquid phase (second part of step 5 - see Fig.1).

The temperature of said crystallization is preferably less than 40°C.

Preferably, the second strong acid is hydrochloric acid. In such a case, the chloride/sodium molar ratio is comprised between 0.8 and 1.5, more preferably 1.2; its concentration may be comprised between 25 and 40 % w/w, and it may have a P₂O₅ content comprised between 30 and 65 % w/w.

The salt is preferably chosen in the group consisting of sodium chloride, potassium chloride, ammonium chloride and mixtures thereof. Preferably, the salt is in a solid state. The salt is preferably suitable for human food or for pharmaceutical applications.

The organic solvent is preferably chosen in the group consisting of methylisobutylketone, butanol, pentanol,organic solvents in C4 to C7 and mixtures thereof.

The process of the invention may further comprise, preferably before the extraction of the organic extraction phase containing phosphoric acid,
- washing of the said organic extraction phase containing phosphoric acid by an aqueous solution in order to obtain a washed organic phase containing phosphoric acid and an aqueous phase containing impurities and some phosphoric acid;
- separating the obtained washed organic phase containing phosphoric acid which is suitable for said re-extraction. (STEP 7 B - see Fig.1)

It may further comprise steam entraining of traces of organic extraction agent from the said third phosphoric acid.(Step not represented in Fig.1)

Preferably, the third phosphoric acid has a P₂O₅conten comprised between 10 and 50 % w/w.

Preferably, the ion exchange is performed with a cation exchange resin.

In a preferred manner, the process according to the invention may further comprise concentrating the said high purity phosphoric acid.

Any liquid effluent and solid residue, containing phosphate ions, may be recycled in the process of the invention.

Preferably, the high purity phosphoric acid has a P₂O₅ content between 50 and 65 % w/w.

### Brief description of the drawing

Fig. 1 is a block diagram representing steps 1 to 9 of a process according to the invention for producing high purity phosphoric acid.

### General description of a process according to the invention

### 1. Attack of phosphate rock with diluted HCl

Step 1 of the process, illustrated in Fig.1, consists of an attack of phosphate rock with diluted HCl. For instance, phosphate rock with a P₂O₅ content typically between 20 and 35 % P₂O₅ is introduced into a reactor (input I) together with an aqueous solution of HCl, diluted between 3 and 10 % (input II). A residue of impurities is obtained in the form of a solid cake after liquid-solid separation (output A). Washing water is eliminated or recycled in the process (output B). The filtrate (PS) is a solution of PA, calcium chloride and mono calcium phosphate (MCP) Ca(H₂PO₄)₂. The pH of the solution is below 1. The pH may be increased, for instance, between 0.9 and 2.0 by addition of milk of lime and/or calcium carbonate. Said step, called pre-neutralization, is optional and not represented in Fig. 1. If pre-neutralization is applied, the purity of the obtained aqueous solution is enhanced.

### 2. Production of dicalcium phosphate (DCP)

In step 2, CaCO₃, and/or a solution of milk of lime Ca(OH)₂ are introduced, respectively inputs III and IV, thereby (further) increasing pH. The aqueous solution of phosphate reacts with calcium and water in such a way that DCP (also sometimes designated calcium monohydrogenophosphate) CaHPO₄.2H₂O (DCP) precipitates. The DCP precipitation occurs for instance according to the chemical equations

2 H₃PO₄ + CaCO₃ →Ca(H₂PO₄)₂ +CO₂+H₂O

Ca(H₂PO₄)₂ + CaCO₃ + 3H₂O → 2 CaHPO₄.2H₂O + CO₂.

After liquid-solid separation a solid DCP is obtained and washed. An aqueous filtrate containing CaCl₂ is evacuated (output C) and gaseous CO₂ is emitted (output D). CaCl₂ solution may be disposed off with little harm for environment or alternatively recycled to HCl through a reaction with H₂SO₄ and thus recycled.

### 3. Production of gypsum and phosphoric acid through attack of DCP with sulphuric acid

In step 3, the (humid) DCP is converted to pre-purified liquid phosphoric acid PA1 by reaction with H₂SO₄ (input V) and calcium is removed by gypsum precipitation, according to the chemical equation

CaH₂PO₄.2H₂O +H₂SO₄ → CaSO₄.2H₂O+H₃PO₄+2H₂O.

A liquid-solid separation step produces liquid phosphoric acid (PA1) and solid gypsum (output E). The gypsum co-product is washed and washing water is eliminated or recycled.
The concentration at which H₂SO₄ attacks the DCP in the aqueous phase is preferably high, for instance of 15 % P₂O₅, 22 % H₂SO₄ and 63% water. It is worth noting that, according to the invention, DCP may be produced according to the steps as described above. Alternatively, one may use for the remaining steps of the process a DCP available from any source possible on the market, for instance DCP produced by the companies Decaphos, Rhodia, PotashCorp.

The phosphoric acid so produced (PA1) is submitted to an activated carbon treatment in order to eliminate organic residues, which remain adsorbed to the carbon. This treatment is optional and not represented in Fig.1

### 4. Formation of disodium phosphate solution (Na₂HPO) (DSP I)

In step 4, NaOH or Na₂CO₃, for instance are introduced (input VI). The product reacts with phosphoric acid according to one of the two equations below :

H₃PO₄ + 2NaOH → Na₂HPO₄ + 2 H₂O, or

H₃PO₄ + Na₂CO₃ → Na₂HPO₄ + H₂O+CO₂.

These reactions occur for instance at 60°C. Filtration of the liquid stream reveals a solid residue (output F) which is washed. Washing water is evacuated or recycled in the process. Phosphoric acid may be the phosphoric acid produced by the steps 1 to 3, or by the sulphuric attack of any other DCP or may even be any phosphoric acid available. The chemical structures of any alkaline components are very close. Therefore potassium or sodium bases can be alternatively used.
It has been shown that ammonia or ammonium hydroxide may also be used.

### 5. Crystallisation of DSP (Na₂HPO₄.xH₂O) (DSP S)

In step 5, crystallisation of a solid phosphate salt is realized by cooling down the solution, for example down to 20°C, for example, according to the equation

Na₂HPO₄ (L) + x H2O → Na₂HPO₄.xH₂O (S)

DSP crystals are filtered and washed, filtrate (output G) and washing water are evacuated or recycled in the process.

### 6. Attack of DSP with concentrated HCl

In step 6, the phosphate salt from the previous step reacts with highly concentrated HCl introduced (input VII), for example, according to the equation

Na₂HPO₄.xH₂O (S) + 2 HCl → 2 NaCl (S) + H₃PO₄ + x H₂O

Phosphoric acid is produced (PA2) as well as NaCl (output H). The NaCl produced is under the form of a solid cake. It is washed. Washing solution is evacuated or recycled in the process. The NaCl obtained by the process according to the invention is very pure (for instance food or pharmaceutical grade quality).

### 7. Liquid/liquid extraction

The liquid/liquid extraction of step 7 allows to reduce sodium and other cation traces from H₃PO₄ (PA2).

### 7A. Solvent extraction

In solvent extraction, the aqueous phase PA2 is intensely mixed with an appropriate organic solvent (input XIII) which can be for instance Methyl Isobutyl Ketone (MIBK), butanol, pentanol or other organic solvents in the range C₄ to C₇. After stirring, the organic phase and the aqueous phase are separated. The loaded organic phase, which is the phase of interest after stirring has absorbed the phosphoric acid. The aqueous phase (raffinate: output I) can be recycled in the process.

### 7B. Washing of the loaded organic phase

The loaded organic phase is washed by addition of washing solution in order to decrease selectively the content of ionic contaminants. The washing solution can be water or phosphoric acid. After stirring and decantation, the raffinate produced (output J) is removed and can be recycled in the process.

### 7C. Re-extraction

The phosphoric acid present in the loaded organic phase is re-extracted with water. After intense stirring, the lean organic phase and the aqueous phase, containing phosphoric acid are separated. The aqueous phase is the phase of interest (PA3). The lean organic phase (output K) is recycled in step 7A as organic solvent.

### 8. Solvent removal

The obtained phosphoric acid (PA3) contains traces of used solvent. Steam stripping is intended to remove traces of solvent (output L) and residual HCl (output M). The recovered solvent is recycled in step 7A.

The phosphoric acid produced (PA4) is submitted to an activated carbon treatment in order to eliminate last traces of organic residues, which remain adsorbed to the carbon. This treatment is optional.

### 9. Cation exchange

The liquid phosphoric acid from the preceding step (PA4) is passed on a cation exchange resin to remove traces of metal ions.

The solution obtained is filtered to remove potential microparticles. The final product is high purity phosphoric acid electronic grade quality (PA5)

It has been shown that very good results have been obtained. This will be illustrated in the following example which is not limitative.

### Example 1

### 1.1. Production of phosphoric acid from phosphate rock

(Step 1) - 1410 g of HCl 33% w/w is diluted up to 10% w/w with 3230 g of H₂O. The mixture is added in a reactor containing 1000 g of rock. This rock contains 29% of P₂O₅ and 32 % of calcium. CaCl₂ and H₃PO₄ are formed. A pre-neutralization is effected in order to diminish the content of impurities. The pH is adjusted to 1.4 by adding 484 g of milk of lime Ca(OH)₂. Monocalcium phosphate (MCP) Ca(H₂PO₄)₂ is formed. The solid that contains rock residue and precipitated impurities is removed from the slurry by filtration.

(Step 2) Calcium carbonate CaCO₃ and milk of lime are added, thereby increasing pH. As a result, dicalcium phosphate (DCP) CaHPO₄.2H₂O precipitates and CO₂ is emitted. In practice, 1000 g of MCP are introduced into a reactor which is heated up to 50°C. 44 g calcium carbonate are added, thereby increasing pH up to 3.0. The pH is increased up to pH 4.2 by addition of 5g of milk of lime. The slurry is filtered on a Büchner filter. 301 g of humid DCP are recovered, 774 g of liquid residue, (mainly CaCl₂) are disposed off. The humid DCP is washed with pure water. Humid DCP contains 19 % of Ca⁺⁺, 29 % of P₂O₅ and 35 % of moisture.

(Step 3) 184g H₂O and 148 g H₂SO₄ 96 % are mixed into a beaker. The mixture is heated to 60°C. 301 g of DCP are introduced in the beaker. After 30 minutes of reaction, the mixture is filtered on a Büchner filter. The gypsum CaSO₄.2H₂O produced is washed with H₂O. Liquid phosphoric acid is produced. The gypsum obtained is of very good purity as shown in Table 1.

**Table 1**

| Impurities in calcium sulfate | |
|---|---|
| **Element** | **Content (ppm)** |
| P₂O₅ | 100 |
| Al | 9,7 |
| As | < 0,2 |
| B | <3 |
| Ba | 0,6 |
| Bi | < 18 |
| Cd | < 0,6 |
| Co | < 1 |
| Cr | 1 |
| Cu | 1,2 |
| Fe | 5 |
| K | 24 |
| Mg | < 1 |
| Mn | < 0.6 |
| Mo | < 2 |
| Ni | < 5 |
| Pb | < 6 |
| Sb | < 0,1 |
| Se | < 0,1 |
| Si | 16 |
| Sn | < 7 |
| Sr | 66 |
| Ti | < 2 |
| V | <3 |
| Zn | < 1 |

### 1.2. Production of disodium phosphate (DSP) Na₂HPO₄

1000 g of phosphoric acid of the preceding step that contains 22% P₂O₅ is set in a beaker. pH is adjusted to 8.0 by addition of NaOH 50%. 495 g of NaOH 50% is added in order to reach pH 8.0. The mixture is stirred for 30 minutes at 60°C to allow complete reaction. Disodium phosphate (DSP) Na₂HPO₄ is obtained. A slight precipitate appears. The solution is then filtered, keeping the temperature higher than 50°C.

The solution obtained at the previous step is cooled at 20°C while stirring. This temperature decrease leads to crystallisation of disodium phosphate. The obtained crystals are filtered on a Büchner filter and washed with cold water. 620 g of washed humid crystals with P₂O₅ content of 29 % are obtained. The filtrate including washing water contains 10% P₂O₅ and can be recycled earlier in the process. Table 2 gives the contents in ppm of ions in the produced DSP. As can be seen, the results are very good.

**Table 2**

| **Solid disodium phosphate (DSP S)** obtained after step 5 of the process (intermediate product) | | | |
|---|---|---|---|
| P₂O₅ (%) | | | 29 |
| **Group or element** | | **Ions** | Content ppm |
| | Antimony | Sb | <0,4 |
| | Arsenic | As | 0,5 |
| | Ferral | Fe | 0,9 |
| | | Al | 7,2 |
| **Group or element** | | **Ions** | Content ppm |
| | Alkali earth metals | Ca | 63 |
| | | Mg | 11 |
| | | Sr | <0,1 |
| | Alkali metals | Na | 18581 |
| | | Li | <0,2 |
| | | K | 39 |
| | Heavy metals | Ti | <0,1 |
| | | Cr | <0,3 |
| | | Co | <0,4 |
| | | Ni | <0,2 |
| | | Cu | <0,3 |
| | | Mn | <0,1 |
| | | Pb | <1,5 |
| | | Zn | 1,0 |

### 1.3. Attack of DSP with concentrated HCl

(Step 6) 500 g of DSP crystals so produced, containing 29% of P₂O₅ are introduced in a beaker that contains 476 g of hydrochloric acid 37%. The molar ratio HCl/PO₄³⁻ is 1.2. The mixture is stirred during 30 minutes and filtered with a Büchner. 753 g of phosphoric acid and 144 g of NaCl are obtained. Phosphoric acid solution contains 11 % of P₂O₅. The phosphoric acid is concentrated to 47% P₂O₅. 334 g of phosphoric acid is obtained. Due to the concentration, NaCl continues to precipitate. 78 g of precipitated NaCl is removed by filtration and mixed with the NaCl previously obtained prior to washing it with pure water. Washing water can be recycled earlier in the process. Samples of NaCl are kept for analysis.

**Table 3**

| | |
|---|---|
| NaCl (% w/w) | 99,9 |
| Insoluble matter (%) | <0,01 |
| Ca (ppm) | 4,5 |
| Mg (ppm) | 0,22 |
| Al (ppm) | 1,0 |
| As (ppm) | <0,5 |
| Br (ppm) | <15 |
| Fe (ppm) | 3,2 |
| SO₄⁻⁻ (ppm) | 12 |
| Heavy metals (lead eq) (ppm) | <5 |
| Potassium ferro cyanide (ppm) | <10 |
| Phosphore as phosphate (ppm) | <25 |

As is apparent from the results in Table 3, the NaCl is very pure: food or pharmaceutical grade. See, for instance, Codex Standard for food grade salts, European Pharmacopoeia and Food Chemical Codex (FCC).

### 1.4 Liquid-liquid extraction

(Step 7A) 200 ml (298 g) of phosphoric acid that contains 47% of P₂O₅ (aqueous phase) are set into a funnel. 400 ml (321 g) of Methyl Isobutyl Ketone (MIBK) is added (organic phase). The organic/aqueous ratio is 2/1. The mixture is stirred during two minutes. After stirring, the complete separation of the two phases occurs in less than two minutes. The organic phase and the aqueous phase are separated. 487 ml (462 g) of organic phase and 113 ml (156 g) of aqueous phase (raffinate) are obtained. The aqueous phase contains 40% P₂O₅. The raffinate can be recycled early in the process. The yield can be increased acting on the number of stages of liquid-liquid extraction.

### 1.5. Washing of the organic phase

(Step 7B) The obtained organic phase is washed in order to remove ionic contaminants. 400 ml (380 g) of the organic phase is set in a funnel. 15 ml (15 g) of pure water is added. The mixture is stirred during two minutes. After stirring, the complete separation of the two phases occurs in less than one minute. The organic phase and the aqueous phase are separated. 377 ml (348 g) of organic phase and 38 ml (49 g) of aqueous phase (raffinate) are obtained. The raffinate can be recycled early in the process. The aqueous phase contains 40% P₂O₅.

### 1.6. Re-extraction

(Step 7C) The acid present in the organic phase is re-extracted. 350 ml (322 g) of the organic phase is set in a funnel. 175 ml (175 g) of pure water is added. The mixture is stirred during two minutes. After stirring, the complete separation of the two phases occurs in less than two minutes. The organic phase and the aqueous phase are separated. 332 ml (239 g) of organic phase and 235 ml (258 g) of aqueous phase are obtained. The aqueous phase is the phase of interest. It contains 15% of P₂O₅ and 4.3 g of total organic carbon (TOC) per I of aqueous phase.

### 1.7. Steam stripping and activated carbon treatment

(Step 8) 250 g of the so-obtained phosphoric acid is mixed with 5 g of powdered activated carbon Norit SX1 in order to remove traces of MIBK. The mixture is stirred for 30 minutes prior to filtration. Total organic content TOC is then of 0.16 g /I. The residual organic solvent as well as traces of hydrochloric acid are then removed by steam stripping. In practice, 250 g of the phosphoric acid obtained in the previous step that contains 1.8% of chloride is concentrated up to 62% of P₂O₅ by vacuum evaporation. 60g of concentrated phosphoric acid is obtained. 180g of pure water is added dropwise in the vacuum evaporator during evaporation. The concentration of P₂O₅ is kept higher than 60% during this step. 60g of acid concentrated at 62% are obtained. The residual total organic carbon (TOC) of this acid is 0.011 g/l of phosphoric acid, chloride content is inferior to 21 ppm.

### 1.8 Ion exchange

(Step 9) 60 g of acid obtained from the previous step are diluted to 20% of P₂O₅ with pure water. 186 g are obtained. This diluted acid is passed on a column packed with 80g of cation exchange resin Amberlite UP252 (Rohm and Haas). 180 g of phosphoric acid are obtained.

### 1.9 Filtration

The solution obtained is filtered on a 0.45 µm PTFE membrane (Millipore Corp.) in order to remove potential particles. The so-obtained acid is then concentrated to 62% P₂O₅ by vacuum evaporation.

### 1.10 Results

This product is analyzed by ICP-MS. Results are given in Table 4. As can be seen from this table, wherein the content in contaminants is indicated in ppm, the results obtained are remarkable as far as the contents in metallic cations and anions in the products is concerned. In particular, the results are remarkable for antimony, which is difficult to remove from phosphoric acid. Results obtained shows that, at least the specifications SEMI grade 1 are reached for all elements.

Other steps well known to the person skilled in the art and not represented in the figure may be adopted, such as for instance a treatment with H₂O₂, a purification by resin for anion exchange.

**Table 4**

| Group | | Ions | Semi Grade 1 specifications | Phosphoric acid high purity PA 5 |
|---|---|---|---|---|
| P₂O₅ (%) | | | 62-63 | 62 % |
| Contaminants (ppm) | | | | |
| | Antimony | Sb | 10 | <0,05 |
| | Arsenic | As | 0.05 | <0,03 |
| | Ferral | Fe | 2 | <1 |
| | | Al | 0.5 | 0,12 |
| | Alkali earth metals | Ca | 1.5 | 0,19 |
| | | Mg | 0.2 | < 0,1 |
| | | Sr | 0.1 | < 0,05 |
| | Alkali metals | Na | 2.5 | <1 |
| | | Li | 0.1 | <0,05 |
| | | K | 1.5 | < 0,5 |
| | Heavy metals | Ti | 0.3 | < 0,05 |
| | | Cr | 0.2 | <0,05 |
| | | Co | 0.05 | <0,05 |
| | | Ni | 0.2 | < 0,05 |
| | | Cu | 0.05 | <0,05 |
| | | Mn | 0.1 | < 0,05 |
| | | Pb | 0.3 | <0,05 |
| | | Zn | 2 | ≤ 0,1 |
| | Anions | Cl | 1 | <1 |
| | | NO₃⁻ | 5 | 2 |
| | | SO₄⁻ | 12 | 3 |

## Claims

1. Process for the production of high purity phosphoric acid which comprises the steps of :
- (a) performing an attack of a first phosphate salt with a first strong acid to form a slurry of first phosphoric acid, in solution, and a first solid phase;
- (b) separating the first phosphoric acid from the first solid phase;
- (c) adding a basic compound to the first phosphoric acid to form a new slurry of a second phosphate salt, in solution, and a second solid phase containing impurities;
- (d) separating the second phosphate salt from the second solid phase;
- (e) performing a second attack of the second phosphate salt with a second, concentrated, strong acid to form a second phosphoric acid and a salt;
- (f) separating the second phosphoric acid from the salt;
- (g) extracting the second phosphoric acid with an organic solvent to form an organic extraction phase containing phosphoric acid and an aqueous extraction phase containing impurities;
- (h) re-extracting said organic extraction phase by an aqueous re-extraction agent to form an aqueous re-extraction phase and a phosphoric acid-lean organic phase;
- (i) separating the aqueous re-extraction phase which is a third phosphoric acid and the organic phase; and
- (j) applying ion-exchange to the third phosphoric acid to produce a high purity phosphoric acid.

2. Process according to claim 1, **characterized in that** it further comprises, before the step (a) of performing the attack of the first phosphate salt with the first strong acid, the following steps:
- performing an attack of phosphate rock with a solution of hydrochloric acid to form a slurry consisting of an aqueous phase, containing, in solution, phosphate ions, chloride ions and calcium ions and an insoluble solid phase containing impurities;
- separating the aqueous phase, comprising, in solution, phosphate ions, chloride ions and calcium ions, and the insoluble solid phase;
- performing a neutralisation of the aqueous phase by addition of a calcium compound to form calcium phosphate from the phosphate ions, said calcium phosphate being insoluble in water;
- separating the calcium phosphate, which may be used in the process as the first phosphate salt, and the aqueous phase containing, in solution, calcium ions and chloride ions.

3. Process according to claim 2, **characterized in that** it further comprises the step of performing a preliminary neutralization of the said slurry to a pH lower than the pH at which a significant part of calcium phosphate precipitates.

4. Process according to any of the preceding claims, **characterized in that** the first phosphate salt is calcium monohydrogenophosphate (DCP).

5. Process according to any of the preceding claims, **characterized in that** the first strong acid is sulphuric acid and the first solid phase is gypsum.

6. Process according to any of the preceding claims **characterized in that** the molar ratio between the first strong acid and the first phosphate salt is comprised between 0.6 and 1.6.

7. Process according to any of the preceding claims, **characterized in that** the basic compound is chosen in the group consisting of sodium carbonate, sodium hydroxide, potassium carbonate, potassium hydroxide, ammonia, ammonium hydroxide and mixtures of these compounds.

8. Process according to any of the preceding claims, **characterized in that** the basic compound is added to the first phosphoric acid to reach a pH between 6.0 and 10.0.

9. Process according to any of the preceding claims, **characterized in that** the second phosphate salt is disodium phosphate.

10. Process according to any of the preceding claims, **characterized in that** it further comprises
- obtaining a crystallisation of the second phosphate salt to form a solid phosphate salt and a liquid phase containing impurities;
- separating the second phosphate salt, once crystallized, from the liquid phase.

11. Process according to any of the preceding claims, **characterized in that** the second strong acid is hydrochloric acid.

12. Process according to claim 11, **characterized in that** the chloride/sodium molar ratio is comprised between 0.8 and 1.5.

13. Process according to any of the preceding claims, **characterized in that** the salt is chosen in the group consisting of sodium chloride, potassium chloride, ammonium chloride and mixtures thereof.

14. Process according to any of the preceding claims, **characterized in that** the ion exchange is performed with a cation exchange resin.

15. Process according to any of the preceding claims, **characterized in that** any liquid effluent and solid residue, containing phosphate ions, may be recycled in the said process.

## Patentansprüche

1. Verfahren zur Herstellung von hochreiner Phosphorsäure, das folgende Schritte umfasst:
- (a) Durchführen eines Angriffs eines ersten Phosphatsalzes mit einer ersten starken Säure zur Bildung eines Breis aus erster Phosphorsäure, in Lösung, und einer ersten Feststoff-Phase;
- (b) Trennen der ersten Phosphorsäure von der ersten Feststoff-Phase;
- (c) Hinzufügen einer basischen Verbindung zur ersten Phosphorsäure zur Bildung eines neuen Breis eines zweiten Phosphatsalzes, in Lösung, und einer zweiten, Verunreinigungen enthaltenden Feststoff-Phase;
- (d) Trennen des zweiten Phosphatzales von der zweiten Feststoff-Phase;
- (e) Durchführen eines zweiten Angriffs des zweiten Phosphatsalzes mit einer zweiten, konzentrierten, starken Säure zur Bildung einer zweiten Phosphorsäure und eines Salzes;
- (f) Trennen der zweiten Phosphorsäure von dem Salz;
- (g) Extrahieren der zweiten Phosphorsäure mit einem organischen Lösungsmittel zur Bildung einer organischen, Phosphorsäure enthaltenden Extraktionsphase und einer wässrigen, Verunreinigungen enthaltenden Extraktionsphase;
- (h) Re-Extrahieren der genannten organischen Extraktionsphase durch ein wässriges Extraktionsmittel zur Bildung einer wässrigen Re-Extraktionsphase und einer phosphorhaltigen säurearmen organischen Phase;
- (i) Trennen der wässrigen Re-Extraktionsphase, welche eine dritte Phosphorsäure und die organische Phase ist; und
- (j) Anwenden von Ionen-Austausch auf die dritte Phosphorsäure zur Herstellung einer hochreinen Phosphorsäure.

2. Verfahren nach Anspruch 1, **dadurch gekennzeichnet, dass** es weiterhin, vor dem Schritt (a), der Durchführung eines Angriffs des ersten Phosphatsalzes mit der ersten starken Säure, die folgende Schritte umfasst:
- Durchführen eines Angriffs eines Phosphatgesteins mit einer Lösung aus Salzsäure zur Bildung eines Breis, bestehend aus einer wässrigen Phase, die, in Lösung, Phosphat-Ionen, Chlorid-Ionen und Calcium-Ionen, und eine unlösliche Feststoff-Phase, die Verunreinigungen aufweist, enthält;
- Trennen der wässrigen Phase, bestehend aus, in Lösung, Phosphat-Ionen, Chlorid-lonen und Calcium-Ionen, und der unlöslichen Feststoff-Phase;
- Durchführen einer Neutralisierung der wässrigen Phase durch Hinzufügen einer Calciumverbindung zur Bildung von Calciumphosphat aus den Phosphat-Ionen, wobei das genannte Calciumphosphat in Wasser unlöslich ist;
- Trennen des Calciumphosphates, welches im Verfahren als das erste Phosphatsalz eingesetzt werden kann, und der wässrigen Phase, die, in Lösung, Calcium-Ionen und Chlorid-Ionen enthält.

3. Verfahren nach Anspruch 2, **dadurch gekennzeichnet, dass** es weiterhin, den Schritt des Bildens einer vorläufigen Neutralisierung des genannten Breis zu einem pH-Wert, der niedriger ist als der pH-Wert, bei welchem ein signifikanter Anteil des Calciumphosphats ausfällt, umfasst.

4. Verfahren nach einem der vorstehenden Ansprüche, **dadurch gekennzeichnet, dass** das erste Phosphatsalz Calcium-Monohydrogencarbonat (DCP) ist.

5. Verfahren nach einem der vorstehenden Ansprüche, **dadurch gekennzeichnet, dass** die erste starke Säure Schwefelsäure und die erste Feststoff-Phase Gips ist.

6. Verfahren nach einem der vorstehenden Ansprüche, **dadurch gekennzeichnet, dass** das Molverhältnis zwischen der ersten starken Säure und dem ersten Phosphatsalz zwischen 0.6 und 1.6 liegt.

7. Verfahren nach einem der vorstehenden Ansprüche, **dadurch gekennzeichnet, dass** die basische Verbindung aus der Gruppe, bestehend aus Natriumcarbonat, Natriumhydroxid, Kaliumcarbonat, Kaliumhydroxid, Ammoniak, Ammoniumhydroxid und Mischungen dieser Verbindungen, ausgewählt wird.

8. Verfahren nach einem der vorstehenden Ansprüche, **dadurch gekennzeichnet, dass** die basische Komponente zur ersten Phosphorsäure hinzugefügt wird zum Erreichen eines pH-Werts zwischen 6.0 und 10.0.

9. Verfahren nach einem der vorstehenden Ansprüche, **dadurch gekennzeichnet, dass** das zweite Phosphatsalz Dinatriumhydrogenphosphat ist.

10. Verfahren nach einem der vorstehenden Ansprüche, **dadurch gekennzeichnet, dass** es im Weiteren umfasst:
- Gewinnen einer Kristallisation des zweiten Phosphatsalzes zur Formung eines festen Phosphatsalzes und einer flüssigen Phase, die Verunreinigungen aufweist;
- Trennen des zweiten Phosphatsalzes, wenn einmal kristallisiert, von der flüssigen Phase.

11. Verfahren nach einem der vorstehenden Ansprüche, **dadurch gekennzeichnet, dass** die zweite starke Säure Salzsäure ist.

12. Verfahren nach Anspruch 11, **dadurch gekennzeichnet, dass** das Chlorid-/Natrium- Molverhältnis zwischen 0.8 und 1.5 liegt.

13. Verfahren nach einem der vorstehenden Ansprüche, **dadurch gekennzeichnet, dass** das Salz aus der Gruppe, bestehend aus Natriumchlorid, Kaliumchlorid, Ammoniumchlorid und Mischungen davon, ausgewählt wird.

14. Verfahren nach einem der vorstehenden Ansprüche, **dadurch gekennzeichnet, dass** der Ionenaustausch mit einem Harz-Kationenaustauscher durchgeführt wird.

15. Verfahren nach einem der vorstehenden Ansprüche, **dadurch gekennzeichnet, dass** jeder flüssige Ausfluss und fester Rückstand, der Phosphat-Ionen enthält, in dem genannten Verfahren rezykliert werden kann.

## Revendications

1. Procédé pour la production d'acide phosphorique de grande pureté, qui comprend les étapes consistant :
- (a) à effectuer une attaque d'un premier sel de phosphate avec un premier acide fort, pour former une suspension d'un premier acide phosphorique, en solution, et une première phase solide ;
- (b) à séparer le premier acide phosphorique, de la première phase solide ;
- (c) à ajouter un composé basique au premier acide phosphorique, pour former une nouvelle suspension d'un deuxième sel de phosphate, en solution, et une deuxième phase solide contenant des impuretés ;
- (d) à séparer le deuxième sel de phosphate, de la deuxième phase solide ;
- (e) à effectuer une deuxième attaque du deuxième sel de phosphate avec un deuxième acide fort, concentré, pour former un deuxième acide phosphorique et un sel ;
- (f) à séparer le deuxième acide phosphorique, du sel ;
- (g) à extraire le deuxième acide phosphorique avec un solvant organique, pour former une phase d'extraction organique contenant de l'acide phosphorique, et une phase d'extraction aqueuse contenant des impuretés ;
- (h) à réextraire ladite phase d'extraction organique, par un agent de réextraction aqueux, pour former une phase de réextraction aqueuse et une phase organique pauvre en acide phosphorique ;
- (i) à séparer la phase de réextraction aqueuse qui est un troisième acide phosphorique, et la phase organique ; et
- (j) à appliquer un échange d'ions au troisième acide phosphorique, pour produire un acide phosphorique de grande pureté.

2. Procédé selon la revendication 1, **caractérisé en ce qu'**il comprend en outre, avant l'étape (a) consistant à effectuer l'attaque du premier sel de phosphate avec le premier acide fort, les étapes qui suivent consistant :
- à effectuer une attaque du minerai de phosphate avec une solution d'acide chlorhydrique, pour former une suspension se composant d'une phase aqueuse contenant, en solution, des ions phosphate, des ions chlorure et des ions calcium, et une phase solide insoluble contenant des impuretés ;
- à séparer la phase aqueuse comprenant, en solution, des ions phosphate, des ions chlorure et des ions calcium, et la phase solide insoluble ;
- à effectuer une neutralisation de la phase aqueuse par addition d'un composé de calcium, pour former du phosphate de calcium à partir des ions phosphate, ledit phosphate de calcium étant insoluble dans l'eau ;
- à séparer le phosphate de calcium qui peut être utilisé, dans le procédé, comme le premier sel de phosphate, et la phase aqueuse contenant, en solution, des ions calcium et des ions chlorure.

3. Procédé selon la revendication 2, **caractérisé en ce qu'**il comprend en outre l'étape consistant à effectuer une neutralisation préliminaire de ladite suspension, à un pH inférieur au pH auquel une partie importante du phosphate de calcium précipite.

4. Procédé selon l'une quelconque des revendications précédentes, **caractérisé en ce que** le premier sel de phosphate est du monohydrogénophosphate de calcium (DCP).

5. Procédé selon l'une quelconque des revendications précédentes, **caractérisé en ce que** le premier acide fort est de l'acide sulfurique, et la première phase solide est du gypse.

6. Procédé selon l'une quelconque des revendications précédentes, **caractérisé en ce que** le rapport molaire entre le premier acide fort et le premier sel de phosphate est compris entre 0,6 et 1,6.

7. Procédé selon l'une quelconque des revendications précédentes, **caractérisé en ce que** le composé basique est choisi parmi le groupe se composant de carbonate de sodium, d'hydroxyde de sodium, de carbonate de potassium, d'hydroxyde de potassium, d'ammoniac, d'hydroxyde d'ammonium et de mélanges de ces composés.

8. Procédé selon l'une quelconque des revendications précédentes, **caractérisé en ce que** le composé basique est ajouté au premier acide phosphorique, pour atteindre un pH compris entre 6,0 et 10,0.

9. Procédé selon l'une quelconque des revendications précédentes, **caractérisé en ce que** le deuxième sel de phosphate est du phosphate disodique.

10. Procédé selon l'une quelconque des revendications précédentes, **caractérisé en ce qu'**il comprend en outre les étapes consistant :
- à obtenir une cristallisation du deuxième sel de phosphate, pour former un sel de phosphate solide et une phase liquide contenant des impuretés ;
- à séparer le deuxième sel de phosphate, une fois cristallisé, de la phase liquide.

11. Procédé selon l'une quelconque des revendications précédentes, **caractérisé en ce que** le deuxième acide fort est de l'acide chlorhydrique.

12. Procédé selon la revendication 11, **caractérisé en ce que** le rapport molaire chlorure / sodium est compris entre 0,8 et 1,5.

13. Procédé selon l'une quelconque des revendications précédentes, **caractérisé en ce que** le sel est choisi parmi le groupe se composant de chlorure de sodium, de chlorure de potassium, de chlorure d'ammonium et de mélanges de ces composés.

14. Procédé selon l'une quelconque des revendications précédentes, **caractérisé en ce que** l'échange d'ions est effectué avec une résine échangeuse de cations.

15. Procédé selon l'une quelconque des revendications précédentes, **caractérisé en ce que** tout effluent liquide et résidu solide contenant des ions phosphate peut être recyclé dans ledit procédé.
